(19) **Europäisches Patentamt / European Patent Office / Office européen des brevets**

(11) **EP 4 034 948 B1**

(12) **EUROPEAN PATENT SPECIFICATION**

(45) Date of publication and mention of the grant of the patent:
**12.11.2025 Bulletin 2025/46**

(21) Application number: **19946268.0**

(22) Date of filing: **18.12.2019**

(51) International Patent Classification (IPC):
$H04W\ 4/02^{(2018.01)}$   $G06N\ 3/02^{(2006.01)}$
$G06N\ 20/00^{(2019.01)}$   $G06N\ 3/08^{(2023.01)}$
$G06N\ 5/01^{(2023.01)}$   $G01S\ 5/02^{(2010.01)}$

(52) Cooperative Patent Classification (CPC):
**H04W 4/02; G01S 5/0244; G01S 5/0278; G06N 3/08; G06N 5/01**

(86) International application number:
**PCT/US2019/067105**

(87) International publication number:
**WO 2021/061176 (01.04.2021 Gazette 2021/13)**

(54) **METHOD, APPARATUS AND COMPUTER PROGRAM FOR USER EQUIPMENT LOCALIZATION**

VERFAHREN, VORRICHTUNG UND COMPUTERPROGRAMM ZUR LOKALISIERUNG VON BENUTZERGERÄTEN

PROCÉDÉ, APPAREIL ET PROGRAMME INFORMATIQUE DE LOCALISATION D'ÉQUIPEMENT UTILISATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.09.2019 US 201962906933 P**

(43) Date of publication of application:
**03.08.2022 Bulletin 2022/31**

(73) Proprietor: **Nokia Technologies Oy**
**02610 Espoo (FI)**

(72) Inventors:
• **FEKI, Afef**
**92330 Sceaux (FR)**
• **BALASUBRAMANIAM, Sankaran**
**Nagar 560 075 (IN)**
• **YOON, Daejung**
**91300 Massy (FR)**
• **KOTESHWAR SRINATH, Pavan**
**91400 Orsay (FR)**
• **CAPDEVIELLE, Veronique**
**78114 Magny-les-Hameaux (FR)**

(74) Representative: **Nokia EPO representatives**
**Nokia Technologies Oy**
**Karakaari 7**
**02610 Espoo (FI)**

(56) References cited:
WO-A1-2013/065042    WO-A1-2018/004464
WO-A1-2019/036860    US-A1- 2014 273 911
US-A1- 2016 021 503    US-A1- 2016 021 503
US-A1- 2016 165 468    US-A1- 2016 262 063

• CAMPOS RAFAEL SARAIVA ET AL: "A priori selection of high accuracy mobile station position estimates", 2014 INTERNATIONAL TELECOMMUNICATIONS SYMPOSIUM (ITS), IEEE, 17 August 2014 (2014-08-17), pages 1 - 5, XP032677535, [retrieved on 20141105], DOI: 10.1109/ITS.2014.6947960

**Description**

Field of the Invention

Various example embodiments relate to localization of user equipment devices.

Background

A communication system can be seen as a facility that enables communication sessions between two or more entities such as communication devices, base stations/access points and/or other nodes by providing carriers between the various entities involved in the communications path. A communication system can be provided for example by means of a communication network and one or more compatible communications devices.

Access to the communication system may be via an appropriate communications device or terminal. A communications device is provided with an appropriate signal receiving and transmitting apparatus for enabling communications, for example enabling access to a communication network or communications directly with other communications devices. The communications device may access a carrier provided by a station or access point and transmit and/or receive communications on the carrier.

The communication system and associated devices typically operate in accordance with a given standard or specification which sets out what the various entities associated with the system are permitted to do and how that should be achieved.

International application publication number WO 2019/036860 A1 relates to systems and methods for positioning a terminal based on deep learning. The method may include acquiring, by a positioning device, a set of preliminary positions associated with the terminal device, acquiring, by the positioning device, a base map corresponding to the preliminary positions, and determining, by the positioning device, a position of the terminal device using a neural network model based on the preliminary positions and the base map.

United States patent application publication number US 2016/021503 A1 relates to machine-learning based geolocation techniques to provide the geolocations of user devices and determine the locations of hotspot areas. A coarse geolocation of a user device may be determined based on the wireless communication network usage information of the user device. Device data that includes the coarse geolocation of the use device may be inputted into a trained geolocation model of a machine learning algorithm. A refined geolocation of the user device that is more accurate than the coarse geolocation of the user device may be determined by using the machine learning algorithm to process the device data via the trained geolocation model. The refined geolocation of the user device may be further stored in a data store.

CAMPOS RAFAEL SARAIVA ET AL: "A priori selection of high accuracy mobile station position estimates", 2014 International Telecommunications Symposium presents a backpropagation artificial neural network classifier used to predict the accuracy of mobile station position estimates produced by a network-based radio-frequency fingerprinting method (RF-FING+RTD-PRED). The classifier employs the same radio-frequency parameters used by the aforementioned method plus some additional network data.

Summary

The present invention is defined by the appended independent claims. Certain more specific aspects are defined by the dependent claims.

In the above, many different aspects have been described. It should be appreciated that further aspects may be provided by the combination of any two or more of the aspects described above.

Various other aspects are also described in the following detailed description and in the attached claims.

Brief Description of the Drawings

Some example embodiments will now be described with reference to the following accompanying drawings:

Figure 1 shows an example embodiment of a wireless communication system;

Figure 2 shows an example embodiment of a communications device;

Figure 3 shows an example embodiment of non-transitory computer readable media;

Figure 4 shows an example embodiment of an apparatus;

Figure 5 shows an example embodiment of a non-roaming architecture;

Figure 6 shows an example graph of the expected horizontal location accuracy of different localization methods for different scenarios;

Figure 7 schematically shows an example embodiment of a positioning procedure;

Figure 8 schematically shows an example embodiment of a comparative level of location accuracy provided by different positioning methods of the positioning procedure;

Figure 9 shows an example embodiment of a time scale representation in the case of a UE following a trajectory;

Figure 10 shows an example implementation of the positioning procedure;

Figure 11 shows an example embodiment of an autoencoder;

Figure 12 shows an example flowchart describing an example embodiment of the positioning procedure;

Figure 13 shows an example flowchart describing an example embodiment of the positioning procedure performed by the ML model of the ML based positioning method;

Figure 14 shows an example embodiment of an environment with UE positions; and

Figure 15 shows an example embodiment of a cumulative density function approximation of an estimated error for three location methods.

Detailed description

As used herein, it shall be noted that the terms "location", "localization" and "positioning" and their derivatives or variants are to be used with similar meaning unless otherwise specified.

As is known, wireless systems can be divided into cells and are therefore often referred to as cellular systems. Typically, an access point such as a base station provides at least one cell. The cellular system can support communications between user equipment (UE) devices. The present application relates to cellular radio implementation, including 2G, 3G, 4G, and 5G radio access networks (RANs); cellular internet of things (IoT) RAN; and cellular radio hardware.

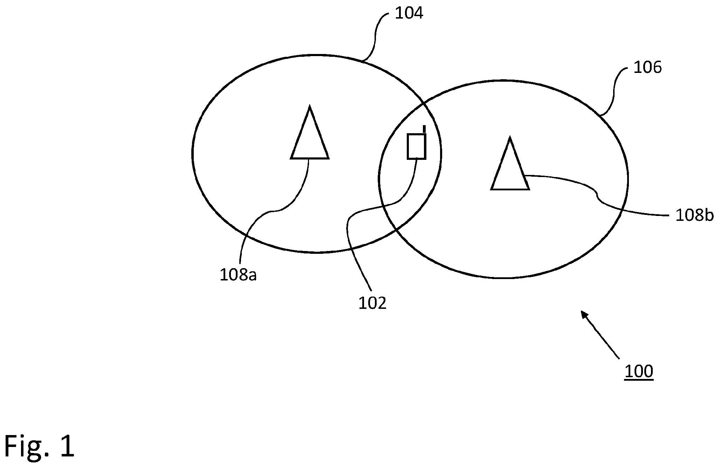

In the following certain embodiments are explained with reference to communications devices capable of communication via a wireless cellular system and communication systems serving such communications devices. Before explaining the example embodiments in detail, certain general principles of a wireless communication system, access systems thereof, and communications devices are briefly explained with reference to Figures 1 to 4 to assist in understanding the technology underlying the described examples.

An example of wireless communication systems are architectures standardized by the 3rd generation partnership project (3GPP). A latest 3GPP based development is often referred to as 5G or new radio (NR). Other examples of radio access system comprise those provided by base stations of systems that are based on technologies such as wireless local area network (WLAN) and/or worldwide interoperability for microwave access (WiMAX). It should be appreciated that although some embodiments are described in the context of a 5G system, other embodiments may be provided in any other suitable system including, but not limited to, subsequent systems or similar protocols defined outside the 3GPP forum.

Figure 1 shows an example embodiment of a wireless communication system 100. As can be seen therein, a communications device 102 is served by a first cell 104, which is provided by a first base station 108a.

In this example embodiment, the communications device 102 may be served by a second cell 106, which is provided by a second base station 108b. The base stations 108a, 108b may be any suitable transmission reception point (TRP) depending on the system 100. For example, the TRP (sometimes referred to as TRxP) may be a gNB or a ng-eNB (the term "ng" standing for "next-generation").

In the following, the communications device will be referred to as a UE. However, it should be appreciated that the device may be any suitable communications device and the term UE may be intended to cover any such device. Some examples of communications devices are discussed below and, as used in this document, the term UE is intended to cover any one or more of those devices and/or any other suitable device. The communications devices have a wireless connection to a base station.

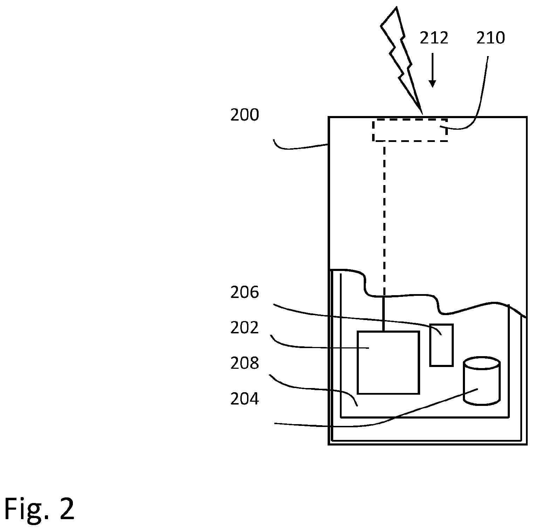

Figure 2 shows an example embodiment of a communications device 200 such as the communications device 102 of figure 1.

The communications device 200 may be provided by any device capable of sending and receiving radio signals. Non-limiting examples comprise a mobile station (MS) or mobile device such as a mobile phone or what is known as a "smart phone", a computer provided with a wireless interface card or other wireless interface facility (e.g., USB dongle), personal data assistant (PDA) or a tablet provided with wireless communication capabilities, machine-type communications (MTC) devices, IoT-type communications devices, or any combination thereof or the like.

As can be seen, the communications device 200 may comprise a transceiver apparatus 210 configured to receive signals over an air or radio interface 212 and transmit signals. The transceiver apparatus 210 may be provided, for example, by means of a radio part and associated antenna arrangement. Furthermore, the antenna arrangement may be arranged internally or externally to the communications device 200.

The communications device 200 may comprise at least one processor 202 and at least one memory 204. The at least one memory 204 may comprise at least one read-only memory (ROM) and/or at least one random access memory (RAM). The communications device 200 may comprise other possible components 206 for use in software and hardware aided execution of tasks it is designed to perform, including control of access to and communications with access systems and other communications devices. The at least one processor 202 is coupled to the at least one memory 204. The at least one processor 202 may be configured to execute an appropriate software code to implement one or more of the following embodiments. The software code may be stored in the at least one memory 204, for example in the at least one ROM.

The processor 202, storage and other relevant control apparatus can be provided on an appropriate circuit board and/or in chipsets, which are denoted by reference 208.

The communications device 200 may optionally have a user interface such as a key pad, a touch sensitive screen or a pad, or any combination thereof or the like.

Optionally, one or more of a display, a speaker and a microphone may be provided depending on the type of the communications device 200.

Communication protocols and/or parameters which shall be used for the connection are also typically defined. The communications devices 200 may access the communication system 100 based on various access techniques.

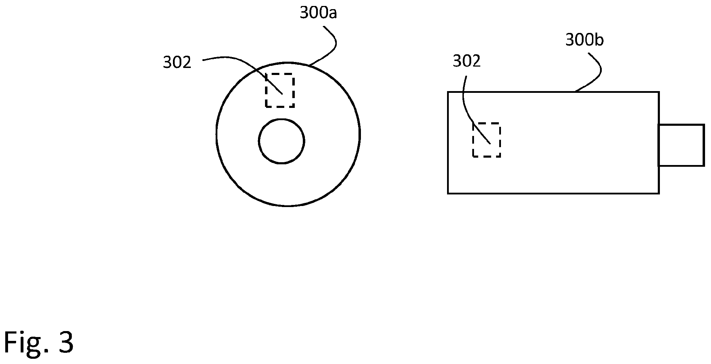

Figure 3 shows an example embodiment of non-transitory computer readable media 300a (e.g., a computer disc (CD) or a digital versatile disc (DVD)) and 300b (e.g., an universal serial bus (USB) memory stick), which are configured to store instructions and/or parameters 302 that, when executed by a processor, allow the processor to perform one or more of the steps of any of the methods of any of the embodiments.

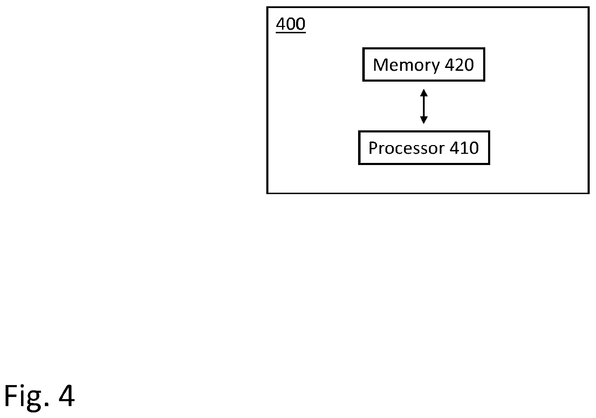

Figure 4 shows an example embodiment of an apparatus 400.

The apparatus 400 may be provided in any of the network entities. The apparatus 400 may comprise at least processor 410 and at least one memory 420 including computer code for one or more programs. The apparatus 400 may be configured to cause some embodiments to be performed and provided in, for example, a location management function (LMF).

One or more of the following aspects relate to a 5G system (5GS). The new radio interface introduced as part of 5GS is called new radio (NR). However, it will be understood that some of these aspects may be used with any other suitable radio access technology system such as the long-term evolution (LTE) of the universal mobile telecommunications system (UMTS), the UMTS terrestrial radio access network (UTRAN) (3G radio) and/or any other suitable system.

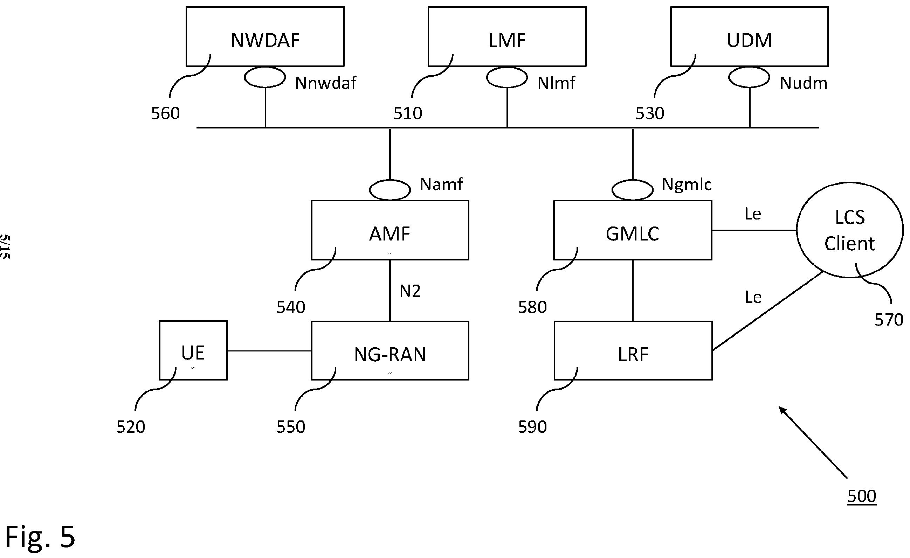

Figure 5 shows a non-roaming architecture 500 for location services in a service based interface representation, in which various functions may be provided by a network in addition to the communication devices and their interfaces to the network.

Some of these network functions may be provided by the core network (CN). Example embodiments of the present application may be provided by such a network that provides these functions. Again, although reference is made here and elsewhere in the description to a UE, it shall be understood by the skilled person that the communications device may be another type of communications device than a UE.

The LMF 510 of the architecture 500 is a network entity in the 5G CN (5GC) responsible for supporting location determination for a UE 520, obtaining downlink (DL) location measurements or a location estimate from the UE 520, obtaining uplink (UL) location measurements from the radio access network (NG-RAN) 550, and obtaining non-UE associated assistance data from the NG-RAN 550. In some example embodiments, the LMF 510 may expose its services to external and/or internal clients using a service based application programming interface (API).

The unified data management (UDM) function 530 of the architecture 500 stores subscription information and supports the authentication credential repository and processing function (ARPF) and stores security credentials used for authentication.

The access and mobility management function (AMF) 540 of the architecture 500 is configured to perform a plurality of tasks including: registration management, connection management, reachability management, mobility management and various function relating to security and access management and authorization. The AMF 540 provides these services for devices such as the UE 520, which is configured to communicate with the CN.

The NG-RAN 550 of the architecture 500 is configured to provide access to the CN for the UE 520. The NG-RAN 550 comprises one or more base stations and one or more associated radio network controllers (RNCs).

The network data analytics function (NWDAF) 560 of the architecture 500 is configured to perform data analysis upon request from one or more network functions in the 5G network. In some example embodiments, the NWDAF 560 may expose its services to external and/or internal clients using an API.

The location services client (LCS) 570 of the architecture 500 is configured, as an external client, to send and receive communications towards the CN.

The gateway mobile location centre (GMLC) 580 of the architecture 500 contains functionality required to support location based services and therefore interfaces with the external client like the LCS 570.

The location retrieval function (LRF) 590 of the architecture 500 can be used for retrieving location information for users that initiated an emergency session.

The UE location information may be used by the network for radio resource management (RRM) and also for providing critical emergency services.

In the architecture 500, there are also provided reference points to support location service, such as: "N2" between NG-RAN 550 and AMF 540; and "Le" between GMLC 580 and the LCS client 570 and also between LRF 590 and the LCS client 570.

In the architecture 500, there are also provided service based interfaces to support location service, such as: "Nlmf" exhibited by LMF 510; "Nudm" exhibited by UDM 530; "Namf" exhibited by AMF 540; "Nnwdaf" exhibited by NWDAF 560; and "Ngmlc" exhibited by GMLC 580.

In this regard, several methods have been proposed for performing UE positioning based on nonmachine learning (non-ML) and machine learning (ML).

For example, some of these non-ML based positioning methods can be found in: J. A. del Peral-Rosado et al., "Survey of cellular mobile radio localization methods: from 1G to 5G", IEEE Communications Surveys & Tutorials, vol. 20, no. 2, pp. 1124-1148, Second Quarter 2018. Among them can be cited:

- trilateration: the UE position is obtained by computing the intersection between geometric forms, e.g., circles or hyperbolas, created by distance measurements between the terminal and the reference transmitters or receivers. Examples of measurements may be time of arrival (ToA), time difference of arrival (TDoA) or received signal strength (RSS);
- triangulation: the direction or angle of arrival (DoA or AoA) of the received signals is used to estimate the position by using the intersection of at least two known directions of the incoming signal;
- proximity: the known transmitter position is assigned to be the position of the terminal. An example may be a cell ID (CID) based method, where the provided position is the one of the serving base station;
- scene analysis: also known as fingerprinting or pattern matching, the algorithm is based on finding the best match for a certain signal measurement such as received signal power, time delay or channel delay spread, from a database of fingerprints, wherein each fingerprint is associated with a specific location; and
- hybrid: a combination of the previous localization algorithms can be implemented to improve the overall performance or to support an algorithm that cannot be computed stand-alone given the lack of signal measurements.

The UE localization may be identified as a prerequisite for emergency reasons and for other purposes such as network optimization and location based services (LBS). So far, the non-ML based positioning methods provide an accuracy of the UE location that responds to the requirement set by regulatory bodies for emergency purposes. For example, a regulatory body such as the U.S. federal communications commission (FCC) has defined enhanced 911 (E911) location requirements specifying a 50-meter horizontal and 3-meter vertical location accuracy for 67% of 911 calls.

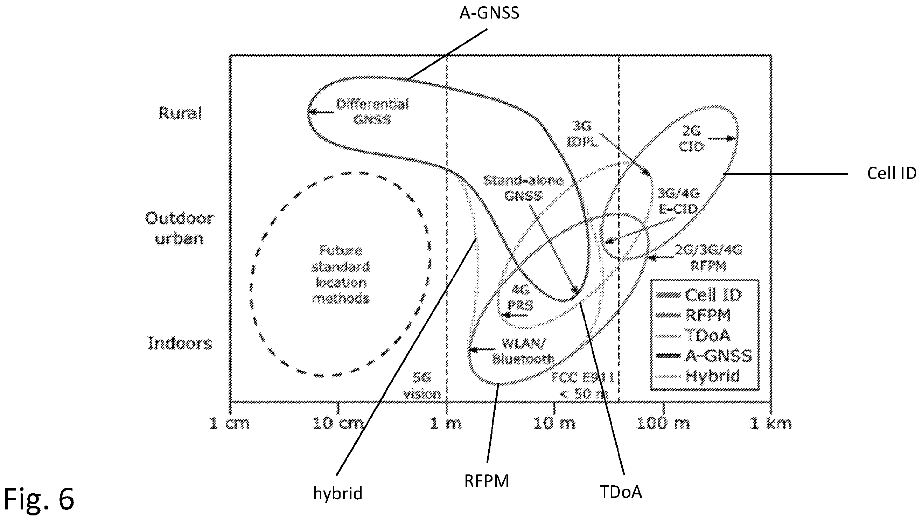

Retrieved from: J. A. del Peral-Rosado et al., "Survey of cellular mobile radio localization methods: from 1G to 5G", IEEE Communications Surveys & Tutorials, vol. 20, no. 2, pp. 1124-1148, Second Quarter 2018, figure 6 shows the expected horizontal accuracy of cellular mobile radio localization methods, such as cell ID, radio frequency pattern matching (RFPM), TDoA, assisted-global navigation satellite systems (A-GNSS) and hybrid, for different scenarios such as indoor, outdoor urban and rural. As can be seen, the methods defined for 2G/3G/4G networks can achieve at best 1-meter accuracy by means of WLAN/Bluetooth measurements.

Also retrieved from: J. A. del Peral-Rosado et al., "Survey of cellular mobile radio localization methods: from 1G to 5G", IEEE Communications Surveys & Tutorials, vol. 20, no. 2, pp. 1124-1148, Second Quarter 2018, the following Table I provides a description of the achievable localization accuracy in the horizontal and vertical plans for different localization methods, such as cell ID + timing advance (CID+TA), cell ID + round-trip time (CID+RTT), enhanced cell ID (E-CID), RFPM, UL-ToA, UL-TDoA (UTDoA), enhanced-OTD (E-OTD), advanced forward link trilateration (AFLT), observed TDoA (OTDoA), A-GNSS, terrestrial beacon systems (TBS), barometer and hybrid, along with their compatible radio access technology (RAT), such as 2G, 3G, 4G, WLAN and Bluetooth.

Table I: Classification of location methods standardized in cellular systems

| Methods | Technology | Type | Category | 67%-loc. accuracy Horizontal (meters) | Vertical (floors) |
|---|---|---|---|---|---|
| CID+TA/CID+RTT | 2G, 3G, 4G | Proximity | Network | > 100 | -- |
| E-CID | 3G, 4G | Proximity | Network | ~ 50 | 1 to 3 |
| RFPM | 2G, 3G, 4G, WLAN, Bluetooth | Scene analysis | Network | > 50 | 1 to 2 |
| Uplink ToA | 2G | Trilateration | Network | > 100 | -- |
| UTDoA | 3G, 4G | Trilateration | Network | < 50 | -- |
| E-OTD | 2G | Trilateration | Mobile / Network | > 100 | -- |
| AFLT | 3G | Trilateration | Mobile / Network | > 50 | -- |
| OTDoA | 3G, 4G | Trilateration | Network | < 50 | ≥ 3 |
| A-GNSS | 2G, 3G, 4G | Lateration | Mobile / Network | ~ 10 | ≥ 3 |
| TBS | 4G | Trilateration | Mobile / Network | < 50 | 1 to 2 |
| Barometer | 4G | Sensors | Mobile / Network | -- | ~ 1 |
| Hybrid | 2G, 3G, 4G | Hybrid | Mobile / Network | < 10 | 1 to 2 |

Nevertheless, a 5G network specifies new use cases and scenarios which require much more localization accuracy compared to what is specified by the regulatory bodies and what is achieved so far by the standardized NR positioning methods. For example, as specified in 3GPP TR 22.862 v14.1.0, high positioning accuracy includes requirements that the location information is acquired quickly, is reliable, and is available (e.g., it is possible to determine the position). One typical area where "higher accuracy positioning" is needed may, for example, be collision avoidance of vehicles: every vehicle must be aware of its own position, the positions of near-by vehicles, and also their expected paths, to avoid collisions. Next generation high accuracy positioning will require a level of accuracy less than 1 meter in more than 95 % of service area, including indoor, outdoor and urban environments. Specifically, network based positioning in three-dimensional space should be supported with accuracy from 10 meters to <1 meter in 80 % of situations, and better than 1 meter for indoor deployments. High accuracy positioning service in a 5G network should be supported in areas of traffic roads, tunnel, underground car-park or indoor environment.

In this regard, ML based positioning methods may have the advantage to have a higher localization accuracy than the non-ML positioning methods. Example ML based positioning methods may be based on models such as artificial neural networks (ANNs) comprising, for example, deep neural networks (DNN) and convolutional neural networks (CNN), decision trees, support vector machines (SVMs), regression analysis, Bayesian networks and genetic algorithms (GAs). An example ML based positioning method may be found in: L. Zhang et al., "An efficient machine learning approach for indoor localization", China Communications, vol. 14, no. 11, pp. 141-150, November 2017. Therein, the ML approach combines grid search based kernel support vector machine and principle component analysis, applies principle component analysis to reduce high dimensional measurements, and designs a grid search algorithm to optimize the parameters of kernel support vector machine in order to improve the localization accuracy. Experimental results indicate that the proposed ML approach reduces the localization error and improves the computational efficiency with respect to K-nearest neighbour, backpropagation neural network and support vector machine based methods.

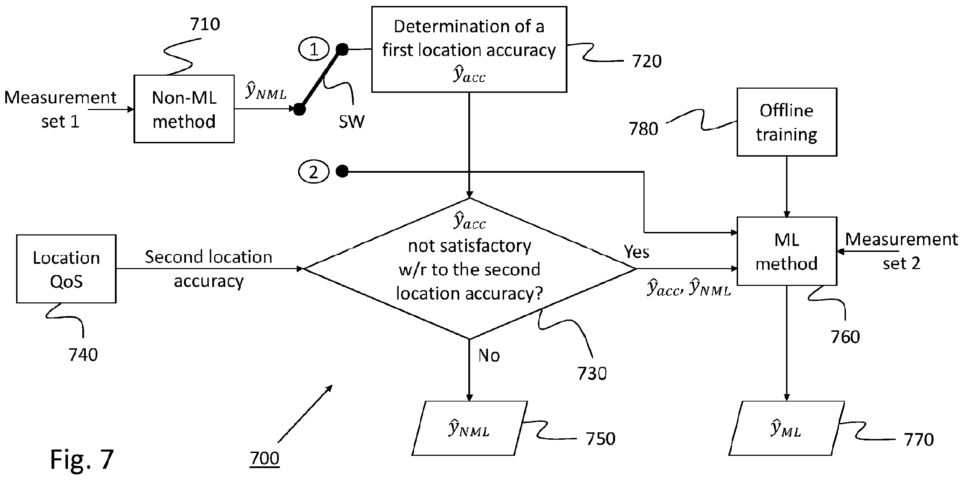

Figure 7 schematically shows an example embodiment of a positioning procedure 700, wherein the depicted reference sign "SW" schematically refers to a two-position switch (the two positions being depicted as ① and ②) to help better visualize schematically the two example embodiments according to which the positioning procedure may be performed.

In a first example stage, a first position, denoted by $\hat{y}_{NML}$, of a communications device (e.g., UE) is determined. Although the example embodiment of figure 7 shows that the determination of the first position $\hat{y}_{NML}$ is performed by a non-ML based positioning method 710 (depicted as non-ML method) using a non-ML model, it shall be noted that, in another example embodiment, the determination of the first position may be performed by a ML based positioning method using a ML model or any other suitable positioning method. The determination of the first position $\hat{y}_{NML}$ comprises estimating the first position $\hat{y}_{NML}$ of the communications device such that the determined first position $\hat{y}_{NML}$ is an estimated position of the communications device.

The non-ML based positioning method 710 may be selected among any positioning method defined by the 3GPP, such as, but not limited to, any location method listed in the above-mentioned Table I. In this regard, the selection of the non-ML based positioning method 710 may depend on the considered RAT and the available inputs in the network that can be employed to estimate the UE localization, such as Wi-Fi measurements, positioning reference signal (PRS) measurements, sounding reference signal (SRS) measurements, and so on. As shown, the non-ML model of the non-ML based positioning method 710 receives as input a first set of measurements, depicted as measurement set 1, and provides as output a first location result denoted by $\check{y}_{NML}$, i.e., the first position of the communications device, based on the received input.

In a first example embodiment (schematically corresponding to SW being switched to the position ①' as shown in figure 7), the determination (referenced by 720) of a first location accuracy $\hat{y}_{acc}$ of the first position $\hat{y}_{NML}$ may be performed and said first location accuracy $\bar{y}_{acc}$ may be compared (referenced by 730) to a target location accuracy, depicted as second location accuracy, of a location quality of service (QoS) (referenced by 740). The determination (referenced by 720) of the first location accuracy $\check{y}_{acc}$ comprises estimating the location accuracy of the first position $\hat{y}_{NML}$ such that the determined first location accuracy $\hat{y}_{acc}$ is an estimated location accuracy of the first position $\check{y}_{NML}$. The first location accuracy $\check{y}_{acc}$ is a positive number which may be expressed in any suitable way, for example, as a percentage value or as a mean square value. The first location accuracy $y_{acc}$ may be determined, for example, by using a lookup table (LUT) with a dedicated database configured to provide the corresponding average location accuracy for each of a plurality of non-ML based positioning methods, and therefore the corresponding average location accuracy for the non-ML based positioning method 710 applied to determine the first position $\check{y}_{NML}$, or in offline manner based on the selected non-ML based positioning method 710 and its parameters while accounting for the propagation environment such as indoor and outdoor. The target location accuracy (i.e., the second location accuracy) may, for example, be a required location accuracy included in a QoS structure as defined, for example, by 3GPP Release 16.

If the comparison results in that the first location accuracy $\check{y}_{acc}$ is equal to or greater than the second location accuracy, then the non-ML based positioning method 710 can be considered satisfactory as regards the accuracy with which the first position $\hat{y}_{NML}$ is determined, and the positioning procedure 700 provides as output (referenced by 750) the first position $\check{y}_{NML}$ (also corresponding to an output of the non-ML model of the non-ML based positioning method 710). On the other hand, if the comparison results in that the first location accuracy $\hat{y}_{acc}$ is lower than the second location accuracy, thereby meaning that the non-ML based positioning method 710 cannot be considered satisfactory with respect to the second location accuracy as regards the accuracy with which the first position $\hat{y}_{NML}$ is determined, then an additional stage, denoted by a second example stage, is required to determine the position of the communications device with an increased location accuracy with respect to the first location accuracy $\check{y}_{acc}$, with the aim of reaching the target location accuracy of the QoS, i.e., the second location accuracy of the QoS. The second location accuracy may be expressed in any suitable way, for example, as a percentage value or as a mean square value.

In order to decrease any signaling overhead due, for example, to PRS transmission, a second example embodiment (schematically corresponding to SW being switched to the position ②) may be provided. In the second example embodiment, the determination 720 of the first location accuracy $\check{y}_{acc}$ of the first position $\hat{y}_{NML}$ and its comparison 730 with the second location accuracy of the QoS are not performed in the first example stage, and the first position $\hat{y}_{NML}$ is directly provided to the second example stage. In this second example embodiment, information about the first location accuracy $\hat{y}_{acc}$ of the first position $\hat{y}_{NML}$ is not provided to the second example stage, and information about the target location accuracy (i.e., the second location accuracy of the location QoS) may be directly obtained at the second example stage due to the availability of said information about the target location accuracy in the network.

In the second example stage, which triggers if the comparison results in that the first location accuracy $\hat{y}_{\alpha cc}$ is lower than the second location accuracy or if the first position $\hat{y}_{NML}$ is directly provided to the second example stage (i.e., without the steps of determining the first location accuracy $\check{y}_{acc}$ of the first position $\hat{y}_{NML}$ and comparing the first location accuracy $\check{y}_{acc}$ and the second location accuracy of the location QoS), a ML based positioning method 760 (referenced by ML method) using a ML model is applied to determine a second position, depicted as $\check{y}_{ML}$, of the communications device such as the UE. The determination of the second position $\hat{y}_{ML}$ comprises estimating the second position $\hat{y}_{ML}$ of the communications device such that the determined second position $\hat{y}_{ML}$ is an estimated position of the communications device.

The ML based positioning method 760 may be based on, for example, but not limited to, ANN models such as DNN models, CNN models, etc. As depicted in figure 7, when SW is set to the position ①, if the above comparison results in that the first location accuracy $\check{y}_{acc}$ is lower than the second location accuracy, then the ML model of the ML based positioning method 760 receives as input, from the first example stage, the first position $\hat{y}_{NML}$ of the communications device and the first location accuracy $\check{y}_{acc}$ in addition to a second set of measurements, depicted as measurement set 2. On the other hand, when SW is set to the position ②, the ML model of the ML based positioning method 760 receives as input, from the first example stage, the first position $\hat{y}_{NML}$ of the communications device in addition to the second set of measurements, depicted as measurement set 2.

The positioning procedure 700 provides as output (referenced by 770) a second location result denoted by $\hat{y}_{ML}$ (also corresponding to an output of the ML model of the ML based positioning method 760), i.e., the second position of the communications device.

The positioning procedure 700 may be based on a supervised learning. To make use of it, an offline training of the ML model is necessary as indicated by reference 780.

In an example embodiment, the real time functioning of the positioning procedure 700 may be realized at the LMF 510. In an example option, the training might run at the NWDAF 560 and the training data might then be collected through minimization of drive-tests (MDT) measurements whose corresponding measurement logs/reports might consist of: time information, RF measurements and detailed location information (e.g. GNSS location information). As MDT may already be available as input to NWDAF 560, it would be then needed to transmit the trained ML model towards LMF 510 to be used in an online manner. In another example option, the training and inference operations might run at the LMF 510. To do so, it would be necessary to make MDT measurements available at the LMF side in order to perform the required training of the ML model.

In an example embodiment in which the ML based positioning method 760 would be specified to be run in the NWDAF 560, then the LMF 510 might use the API provided by the NWDAF 560.

Thus, the positioning procedure 700 of figure 7 may be based on a hybrid use of a first positioning method (i.e., the non-ML based positioning method 710 in the example embodiment of figure 7) and a second positioning method (i.e., the ML based positioning method 760 in the example embodiment of figure 7). Moreover, the positioning procedure 700 may be a two-stage procedure comprising the first example stage (related to the non-ML based positioning method 710 and the optional comparison 730 between the first and second location accuracies) followed by the second example stage (related to the ML based positioning method 760, wherein the output of the first example stage is provided to the input of the second example stage if the above comparison results in that the first location accuracy $\breve{y}_{acc}$ is lower than the second location accuracy or if the first position $\hat{y}_{NML}$ is directly provided to the second example stage). Thereby, the positioning procedure 700 of figure 7 may be considered a hierarchical hybrid localization (HHL) procedure.

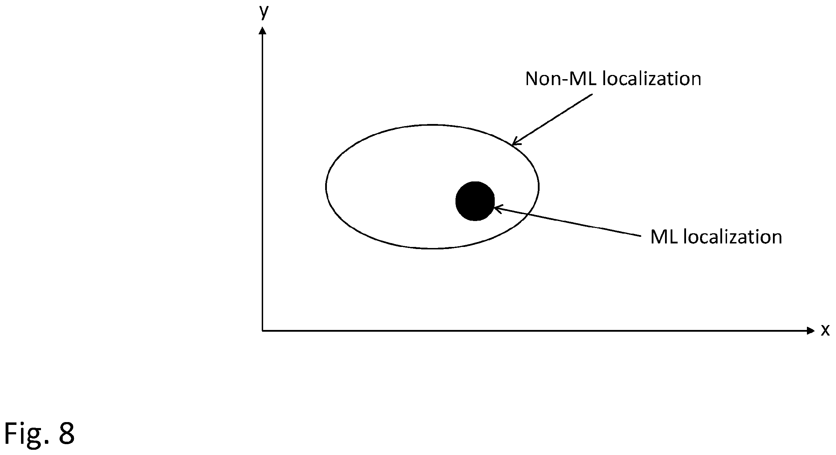

Figure 8 schematically shows an example embodiment of a comparative level of location accuracy provided by the non-ML and ML based positioning methods 710, 760 of the two-stage positioning procedure 700 within a Cartesian coordinate (x, y) system.

As can be seen, the non-ML based positioning method 710, depicted as non-ML localization, may schematically provide a "coarse" level of location accuracy, i.e., the first location accuracy $\hat{y}_{acc}$, of the first position $\hat{y}_{NML}$ of the communications device. After the output of the non-ML model of the non-ML based positioning method 710 has been provided as input to the ML model of the ML based positioning method 760, the ML based positioning method 760, depicted as ML localization, may schematically provide a "fine" level of location accuracy of the first position $\hat{y}_{NML}$ of the communications device to obtain the second position $\hat{y}_{ML}$ of the communications device. Thus, the ML based positioning method 760 of the positioning procedure 700 may be schematically seen as a "zooming" or "refinement" method.

It shall be noted that the first and second example stages of the positioning procedure 700 may run at different time scales, depending on the availability of the inputted first and second sets of measurements at the level of each respective example stage.

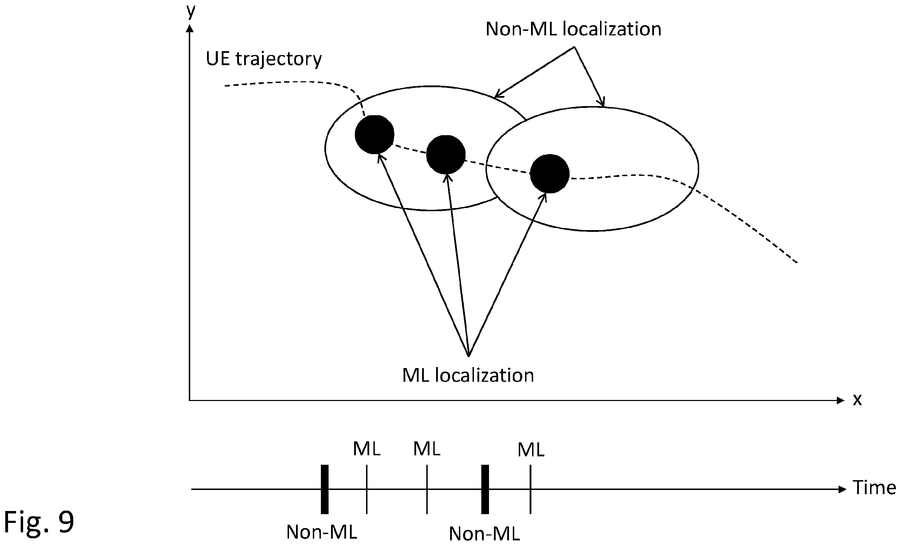

In this regard, figure 9 shows an example embodiment of a time scale representation in the case of a communications device like a UE following a trajectory within a Cartesian coordinate (x, y) system.

As can be seen, the non-ML based positioning method 710, depicted as non-ML localization, provides a larger localization error compared to the ML based positioning method 760 depicted as ML localization. Thus, at different time instants, the ML based positioning method 760 may provide a more accurate UE position compared to the non-ML based positioning method 710, within the position range of the non-ML based positioning method 710.

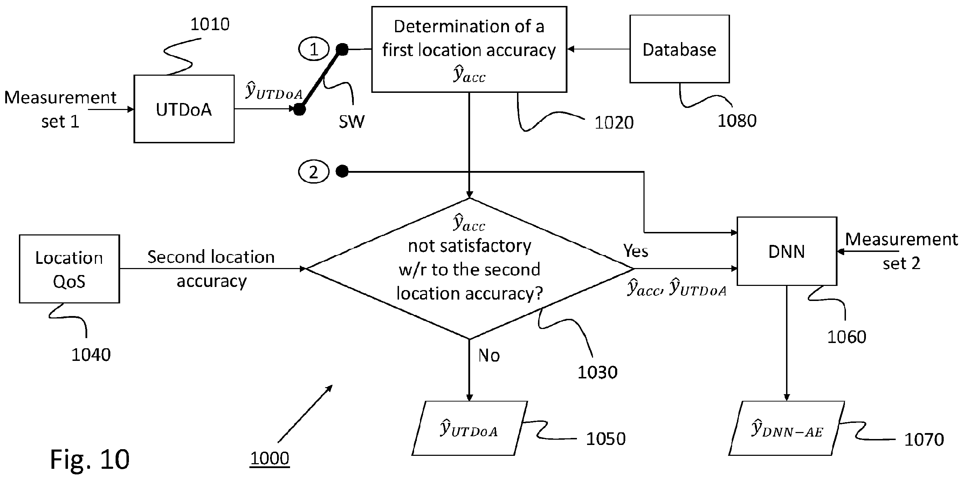

Figure 10 shows an example implementation 1000 of the positioning procedure 700, wherein the non-ML model of the non-ML based positioning method 710 is an UTDoA model of an UTDoA based positioning method 1010 (referenced by UTDoA) and the ML model of the ML based positioning method 760 is a DNN model of a DNN based positioning method 1060 (referenced by DNN).

In this example implementation 1000 of figure 10, the first position of the communications device provided by the first example stage is depicted as $\breve{y}_{UTDoA}$ (which is an estimated position); the second position of the communications device provided by the second example stage is depicted as $\hat{y}_{DNN}$ (which is an estimated position); the first set of measurements, depicted as measurement set 1, may comprise SRS measurements and corresponding configuration parameters; and the second set of measurements, depicted as measurement set 2, may comprise reference signal received power (RSRP) measurements reported by the communications device (e.g., UE) and UL-TOA measurements. Still in figure 10, the determination (referenced by 1020) of the first location accuracy $\breve{y}_{acc}$ (which is an estimated location accuracy) of the first position $\breve{y}_{UTDoA}$ is determined by using a LUT with a database 1080 configured to provide the corresponding average location accuracy for the UTDoA based positioning method; the location QoS providing the second location accuracy is referenced by 1040; the comparison between the first and second location accuracies is referenced by 1030.

Furthermore, the example implementation 1000 of the positioning procedure 700 may provide as output (referenced by 1050) the first position $\hat{y}_{UTDoA}$ in the case where said comparison results in that the first location accuracy $\check{y}_{acc}$ is equal to or greater than the second location accuracy. On the other hand, the example implementation 1000 of the positioning procedure 700 may provide as output (referenced by 1070) the second position $\hat{y}_{DNN}$ (also corresponding to an output of the DNN model of the DNN based positioning method) in the case where the first location accuracy $\check{y}_{acc}$ is lower than the second location accuracy or the first position $\hat{y}_{NML}$ is directly provided to the second example stage.

The DNN model of the DNN based positioning method 1060 may comprise a neural network, e.g., an autoencoder. In an example embodiment, the autoencoder may be a CNN, a DNN or any other suitable ANN.

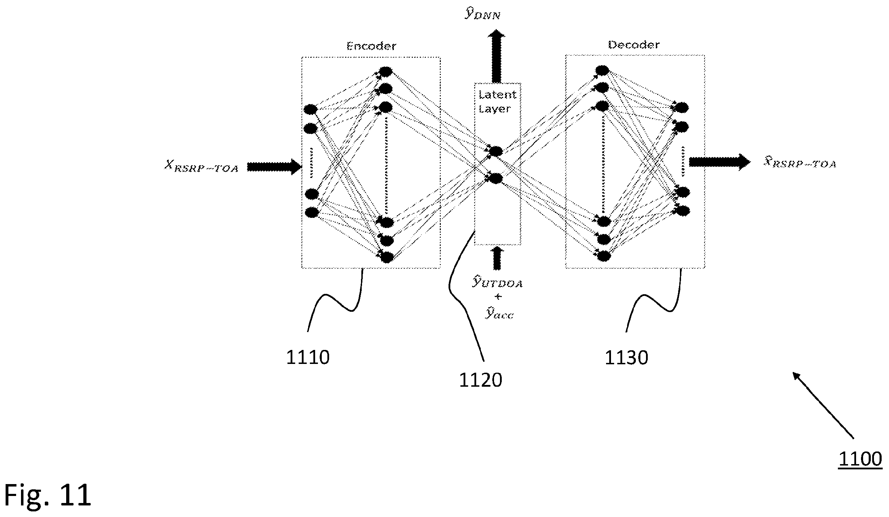

Figure 11 shows an example embodiment of an autoencoder 1100. The autoencoder 1100 may comprise an encoder 1110, a latent-space representation 1120 (also known as code), and a decoder 1130.

The encoder 1110 may comprise one or more hidden layers and is configured to compress input data, depicted as $X_{RSRP\text{-}TOA}$, which may correspond to the second set of measurements comprising the RSRP and UL-TOA measurements, into the latent-space representation 1120, which comprises a single hidden layer denoted by latent layer, as the middle-most layer. As can be seen, the latent layer may receive, from the first example stage of the positioning procedure 700, the first position $\hat{y}_{UTDoA}$ (which is an estimated position) of the communications device, and, when the first location accuracy $\check{y}_{acc}$ is lower than the second location accuracy, the first location accuracy $\hat{y}_{acc}$ (which is an estimated location accuracy) of the first position $\hat{y}_{UTDoA}$, and may then provide as output the second position $\hat{y}_{DNN}$ (which is an estimated position) of the communications device. The decoder 1130 may comprise one or more hidden layers and is configured to reconstruct the input data from the latent-space representation by providing as output the reconstructed input data, depicted as $\hat{X}_{RSRP\text{-}TOA}$. As shown, each of the hidden layers of the encoder 1110, the latent-space representation 1120 and the decoder 1130, has a respective number of neurons (also designated as nodes), the latent layer having the fewest neurons.

ML models require an offline training and the provision of training data or samples. The autoencoder 1100, as an example ML model, may be trained offline according to the following example embodiment.

Let S be the set of training samples, L be the set of samples with labels (i.e., with the ground truth positions available), and U be the remaining set of unlabeled samples. So, S is the union of L and U. For every element $a \in L$, we have the availability of the 4-tuple $\{X_{RSRP\text{-}TOA,a}, y_a, \hat{y}_{UTDoA,a}, \check{y}_{acc,a}\}$, where $X_{RSRP\text{-}ToA,a}, y_a, \hat{y}_{UTDoA,a}$ and $\hat{y}_{acc,a}$ respectively denote the RSRP and UL-TOA measurements ($X_{RSRP\text{-}TOA,a}$), the actual position ($y_a$) of the communications device, the first position ($\check{y}_{UTDoa,a}$) of the communications device which is an estimated position determined by the UTDoA based positioning method 1010 using the UTDoA model, and the first location accuracy ($\check{y}_{acc,a}$) which is a positive number corresponding to an estimated location accuracy of the first position determined by the UTDoA based positioning method 1010 using the UTDoA model. For every element $a \in U$, we only have the availability of the 3-tuple $\{X_{RSRP\text{-}TOA,a}, \hat{y}_{UTDOA,a}, \hat{y}_{acc,a}\}$.

The input of the encoder 1110 of the autoencoder 1100 is $X_{RSRP\text{-}TOA,a}$ and the same is reconstructed as $X_{RSRP\text{-}TOA,a}$ at the output of the decoder 1130 of the autoencoder 1100 for all $a \in S$. The autoencoder 1100 may then be trained using a sum of a first loss $L(X, \hat{X})$ at the output of the decoder 1130 of the autoencoder 1100 and a second loss $L(y, \check{y})$ at the latent layer 1120 of the autoencoder 1100.

The first loss $L(X, X)$ at the output of the decoder 1130 may also be designated as the reconstruction loss for the autoencoder 1100 and be given by the following relationship (1):

$$L(X, \hat{X}) = \sum_{a \in S} \left\| X_{RSRP\text{-}TOA,a} - \hat{X}_{RSRP\text{-}TOA,a} \right\|^2 \tag{1}$$

The second loss $L(y, \check{y})$ at the latent layer 1120 may be given by the following relationship (2):

$$L(y, \hat{y}) = \sum_{b \in L} \left\| y_b - \hat{y}_{DNN,b} \right\|^2 + \sum_{a \in S} \max\{ \left\| \hat{y}_{DNN,a} - \hat{y}_{UTDoA,a} \right\|^2 - \hat{y}_{acc,a}^2, \ 0 \} \tag{2}$$

As can be seen, the second loss $L(y, \check{y})$ is the sum of a first and second loss term. The first loss term $\sum_{b \in L} \| y_b - \hat{y}_{DNN,b} \|^2$ is the mean-squared error (MSE) loss between the actual positions for the available labeled data and the estimated positions (i.e., the second positions) of the communications device determined by the DNN based positioning method 1070 using the autoencoder 1100. The second loss term $\sum_{a \in S} \max\{ \left\| \hat{y}_{DNN,a} - \hat{y}_{UTDoA,a} \right\|^2 - \hat{y}_{acc,a}^2, \ 0 \}$ is the maximum absolute distance (MAD) loss. It serves to restrict the estimated positions (i.e., the second positions) from the second example stage using the autoencoder 1100, in order to be within a space around the respective estimated positions (i.e., the respective first positions) from the first example stage using the UTDoA model, thereby allowing to achieve a high accuracy with a lesser amount of labeled data.

Thus, the use of a ML model like, for example, the autoencoder 1100, along with estimated positions from a non-ML model of a non-ML based positioning method may shorten the offline training phase of the ML model compared to the use of a standalone ML model of a ML based positioning method, because the ML model requires for the same level of position accuracy a lesser amount of labeled data. It also allows to enhance the location accuracy compared to the location accuracy provided by a standalone non-ML model.

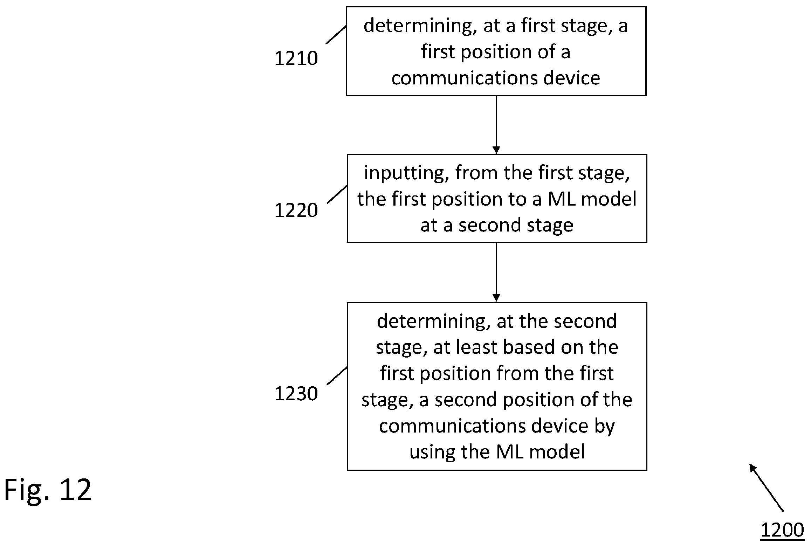

Figure 12 shows an example flowchart 1200 describing an example embodiment of the positioning procedure 700. This example flowchart 1200 may be implemented in, for example, the LMF 510 or an apparatus within the LMF 510.

In step 1210, the method of the example flowchart 1200 may comprise determining, at a first stage, a first position $\hat{y}_{NML}$ of a communications device.

In step 1220, the method of the example flowchart 1200 may comprise inputting, from the first stage, the first position $\hat{y}_{NML}$ to a ML model at a second stage.

In step 1230, the method of the example flowchart 1200 may comprise determining, at the second stage, at least based on the first position $\hat{y}_{NML}$ from the first stage, a second position $\hat{y}_{ML}$ of the communications device by using the ML model.

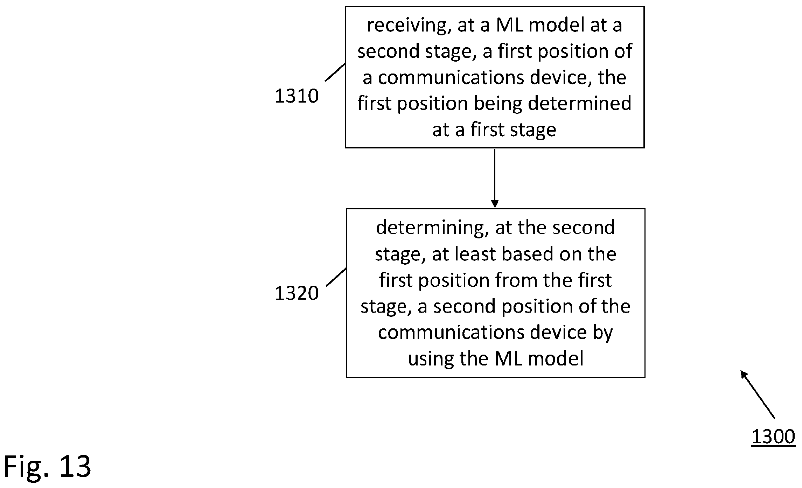

Figure 13 shows an example flowchart 1300 describing an example embodiment of the positioning procedure 700 performed by the ML model of the ML based positioning method 760. This example flowchart 1300 may be implemented in, for example, the LMF 510 or the NWDAF 560, or an apparatus within the LMF 510 or the NWDAF 560.

In step 1310, the method of the example flowchart 1300 may comprise receiving, at a ML model at a second stage, a first position $\hat{y}_{NML}$ of a communications device, the first position $\overline{y}_{NML}$ being determined at a first stage.

In step 1320, the method of the example flowchart 1300 may comprise determining, at the second stage, at least based on the first position $\hat{y}_{NML}$ from the first stage, a second position $\hat{y}_{ML}$ of the communications device by using the ML model.

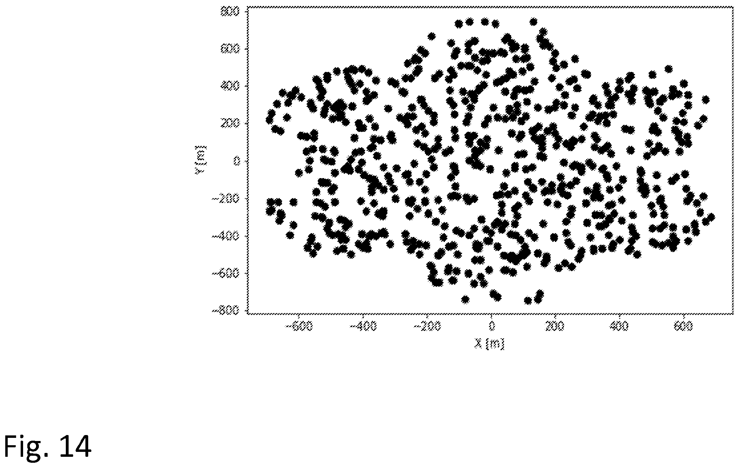

Figure 14 shows an example embodiment of an environment with 2000 UE devices placed within a Cartesian coordinate (x, y) system, where x and y are expressed in meter (m).

For the purpose of simulation, there are 21 gNBs with each UE reporting the strongest beam RSRP to each of the 21 gNBs, and the UL-TOA is measured at each gNB for each of the 2000 UE devices. In the first example stage of localization, a non-ML based positioning method using the UTDoA measurements, such as the UTDoA based positioning method 1010, is applied to obtain estimated UE positions for all the 2000 UE devices. In the next stage (i.e., the second example stage) of localization, a ML model, such as the autoencoder 1100 of figure 11, is used for localization. The encoder section 1110 of the autoencoder 1100 has two dense hidden layers with respective 128 and 32 neurons, the latent layer 1120 of the autoencoder 1100 has two neurons, and the decoder section 1130 of the autoencoder 1100 has two dense hidden layers with respective 32 and 128 neurons. The input and the output layers both have 42 neurons. The input $X_{RSRP\text{-}TOA}$ to the autoencoder is a 42-dimensional vector formed by a 21-dimensional RSRP vector and a 21-dimensional TOA vector. The input $\hat{y}_{UTDoA}, \hat{y}_{\alpha cc}$, which comprises the estimated positions and first location accuracies from the first example stage of localization, is provided to the latent layer 1120. Furthermore, ground truth labels (i.e., true UE positions) are provided for 1000 of the 2000 samples, and the autoencoder 1100 is trained offline using said first loss $L(X, \hat{X})$ at the output of the decoder section 1130 and said second loss $L(y, \check{y})$ at the latent layer 1120.

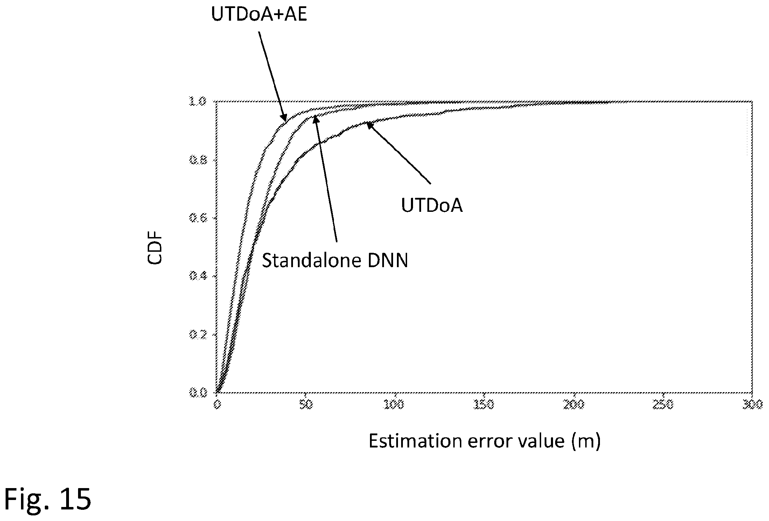

Based on the above simulation parameters, figure 15 shows an example embodiment of a cumulative density function (CDF) plotted against an estimation error value (in meter) for the following three location methods:

- the (standalone) UTDoA based positioning method 1010 using UTDoA measurements as input to the UTDoA model;
- the DNN based positioning method 1060 using the estimated positions and first location accuracies provided by the UTDoA model to the autoencoder 1100 (denoted by AE) as DNN model; and
- the standalone DNN based positioning method 1060 whose autoencoder as DNN model is trained on only 1000 samples without using the estimated positions and first location accuracies from the first example stage.

The following Table II provides a description of the mean estimation error (in meter) calculated on the unlabeled 1000 samples for each of the above three location methods.

Table II: Mean estimation error (in meter) for the above three location methods

| Method | Mean estimation error (in meter) |
|---|---|
| UTDOA | 32.93 |
| UTDOA + AE | 18.45 |
| Standalone DNN | 25.12 |

Table II shows that the average estimation error for the DNN based positioning method 1060 using both the AE 1100 and the estimated positions and first location accuracies provided by the UTDoA model is smaller than for the standalone DNN based positioning method and the UTDoA based positioning method. It shall be noted that the accuracy gains of a standalone ML based positioning method are even more significant when the offline training is performed on a much larger number of samples.

It shall be noted that, while the above described example embodiments, there are several variations and modifications which may be made to the disclosed solution without departing from the scope of the present application. For instance, although the example embodiments of figures 7 to 14 be illustratively related to a positioning procedure based on a non-ML based positioning method using a non-ML model in the first example stage and based on a ML based positioning method using a ML model in the second example stage, in another example embodiment, the proposed positioning procedure may be based on a ML based positioning method using a ML model in both the first example stage and the second example stage or be based on any other suitable positioning method using a suitable model in the first example stage and based on a ML based positioning method using a ML model in the second example stage.

The embodiments may thus vary within the scope of the attached claims. In general, some embodiments may be implemented in hardware or special purpose circuits, software, logic or any combination thereof. For example, some aspects may be implemented in hardware, while other aspects may be implemented in firmware or software which may be executed by a controller, microprocessor or other computing device, although embodiments are not limited thereto. While various embodiments may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments may be implemented by computer software stored in a memory and executable by at least one data processor of the involved entities or by hardware, or by a combination of software and hardware. Further in this regard it should be noted that any of the above procedures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi core processor architecture, as non-limiting examples.

Alternatively or additionally, some embodiments may be implemented using circuitry. The circuitry may be configured to perform one or more of the functions and/or method steps previously described. That circuitry may be provided in the base station and/or in the communications device.

As used in the present application, the term "circuitry" may refer to one or more or all of the following:

(a) hardware-only circuit implementations (such as implementations in only analogue and/or digital circuitry);

(b) combinations of hardware circuits and software, such as:

(i) a combination of analogue and/or digital hardware circuit(s) with software/firmware and

(ii) any portions of hardware processor(s) with software (including digital signal processor(s)), software, and memory(ies) that work together to cause an apparatus, such as the communications device or base station to perform the various functions previously described; and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example integrated device.

**Claims**

1. A method comprising:

   receiving (1310), at a machine learning model at a second stage, a first position of a communications device, the first position being determined at a first stage, wherein the first position from the first stage is received directly at the machine learning model at the second stage if a first location accuracy of the first position from the first stage is lower than a second location accuracy of a location quality of service;
   receiving, at the second stage, the first location accuracy from the first stage if the first location accuracy is lower than the second location accuracy; and
   determining (1320), at the second stage, based on the first position from the first stage, the received first location accuracy and a second set of measurements associated with the communications device, a second position of the communications device by using the machine learning model.

2. The method according to claim 1, wherein:

   the machine learning model at the second stage comprises an autoencoder; and
   the first position from the first stage is received at a latent layer of the autoencoder.

3. The method according to claim 2,
   wherein the first location accuracy from the first stage is received at the latent layer of the autoencoder.

4. The method according to claim 2 or 3, further comprising:
   training offline the autoencoder by:

   computing a first loss at an output of the autoencoder;
   computing a second loss at the latent layer of the autoencoder by using at least the first position of the communications device and the second position of the communications device; and
   using the first loss and the second loss to train the autoencoder.

5. The method according to claim 4,
   wherein the second loss comprises a sum of a first term and a second term, the second term causing the second position to be within a space around the first position.

6. The method according to claim 5,
   wherein the second term is based on a maximum absolute distance between the first position and the second position.

7. An apparatus comprising:

   at least one processor; and
   at least one memory including computer program code,
   wherein the at least one memory and the computer program code are configured to, with the at least one processor, cause the apparatus at least perform the method of claim 1.

8. The apparatus according to claim 7, wherein:

   the machine learning model at the second stage comprises an autoencoder; and
   the first position from the first stage is received at a latent layer of the autoencoder.

9. The apparatus according to claim 8,
   wherein the first location accuracy from the first stage is received at the latent layer of the autoencoder.

10. The apparatus according to claim 8 or 9,
    wherein the at least one memory and the computer program code are further configured to, with the at least one processor, cause the apparatus at least to:
    train offline the autoencoder by:

    computing a first loss at an output of the autoencoder;

computing a second loss at the latent layer of the autoencoder by using at least the first position of the communications device and the second position of the communications device; and

using the first loss and the second loss to train the autoencoder.

**11.** The apparatus according to claim 10,
wherein the second loss comprises a sum of a first term and a second term, the second term causing the second position to be within a space around the first position.

**12.** The apparatus according to claim 11,
wherein the second term is based on a maximum absolute distance between the first position and the second position.

**13.** A non-transitory computer readable medium comprising:
program instructions stored thereon for performing any of the methods according to claims 1 to 6.

**Patentansprüche**

**1.** Verfahren, das Folgendes umfasst:

Empfangen (1310) einer ersten Position einer Kommunikationsvorrichtung in einer zweiten Phase an einem Maschinenlernmodell, wobei die erste Position in einer ersten Phase bestimmt wird, wobei die erste Position aus der ersten Phase in der zweiten Phase direkt am Maschinenlernmodell empfangen wird, wenn eine erste Standortgenauigkeit der ersten Position aus der ersten Phase niedriger ist als eine zweite Standortgenauigkeit einer Standortdienstqualität;
Empfangen der ersten Standortgenauigkeit in der zweiten Phase von der ersten Phase, wenn die erste Standortgenauigkeit niedriger ist als die zweite Standortgenauigkeit; und
Bestimmen (1320) einer zweiten Position der Kommunikationsvorrichtung unter Verwendung des Maschinenlernmodells in der zweiten Phase auf Basis der ersten Position von der ersten Phase, der empfangenen ersten Standortgenauigkeit und einem zweiten Satz von Messungen, die mit der Kommunikationsvorrichtung verknüpft sind.

**2.** Verfahren nach Anspruch 1, wobei:

das Maschinenlernmodell in der zweiten Phase einen Autocodierer umfasst; und
die erste Position von der ersten Phase auf einer latenten Schicht des Autocodierers empfangen wird.

**3.** Verfahren nach Anspruch 2,
wobei die erste Standortgenauigkeit aus der ersten Phase auf der latenten Schicht des Autocodierers empfangen wird.

**4.** Verfahren nach Anspruch 2 oder 3, das ferner Folgendes umfasst:
offline Trainieren des Autocodierers durch Folgendes:

Berechnen eines ersten Verlusts an einem Ausgang des Autocodierers;
Berechnen eines zweiten Verlusts an der latenten Schicht des Autocodierers unter Verwendung mindestens der ersten Position der Kommunikationsvorrichtung und der zweiten Position der Kommunikationsvorrichtung; und
Verwenden des ersten Verlusts und des zweiten Verlusts, um den Autocodierer zu trainieren.

**5.** Verfahren nach Anspruch 4,
wobei der zweite Verlust eine Summe eines ersten Terms und eines zweiten Terms umfasst, wobei der zweite Term die zweite Position veranlasst, innerhalb eines Raums um die erste Position zu liegen.

**6.** Verfahren nach Anspruch 5,
wobei der zweite Term auf einem maximalen absoluten Abstand zwischen der ersten Position und der zweiten Position basiert.

**7.** Einrichtung, die Folgendes umfasst:

mindestens einen Prozessor; und
mindestens einen Speicher, der einen Computerprogrammcode beinhaltet,
wobei der mindestens eine Speicher und der Computerprogrammcode dazu ausgelegt sind, die Einrichtung mit
dem mindestens einen Prozessor zu veranlassen, mindestens das Verfahren von Anspruch 1 durchzuführen.

8. Einrichtung nach Anspruch 7, wobei:

das Maschinenlernmodell in der zweiten Phase einen Autocodierer umfasst; und
die erste Position von der ersten Phase auf einer latenten Schicht des Autocodierers empfangen wird.

9. Einrichtung nach Anspruch 8,
wobei die erste Standortgenauigkeit aus der ersten Phase auf der latenten Schicht des Autocodierers empfangen
wird.

10. Einrichtung nach Anspruch 8 oder 9,
wobei der mindestens eine Speicher und der Computerprogrammcode ferner dazu ausgelegt sind, die Einrichtung
mit dem mindestens einen Prozessor mindestens zu Folgendem zu veranlassen:
offline Trainieren des Autocodierers durch Folgendes:

Berechnen eines ersten Verlusts an einem Ausgang des Autocodierers;
Berechnen eines zweiten Verlusts an der latenten Schicht des Autocodierers unter Verwendung mindestens der
ersten Position der Kommunikationsvorrichtung und der zweiten Position der Kommunikationsvorrichtung; und
Verwenden des ersten Verlusts und des zweiten Verlusts, um den Autocodierer zu trainieren.

11. Einrichtung nach Anspruch 10,
wobei der zweite Verlust eine Summe eines ersten Terms und eines zweiten Terms umfasst, wobei der zweite Term
die zweite Position veranlasst, innerhalb eines Raums um die erste Position zu liegen.

12. Einrichtung nach Anspruch 11,
wobei der zweite Term auf einem maximalen absoluten Abstand zwischen der ersten Position und der zweiten
Position basiert.

13. Nichttransitorisches computerlesbares Medium, das Folgendes umfasst:
Programmanweisungen, die darauf gespeichert sind, zum Durchführen von einem der Verfahren nach Anspruch 1 bis
6.

**Revendications**

1. Procédé comprenant les étapes suivantes :

recevoir (1310), dans un modèle d'apprentissage machine à un deuxième stade, une première position d'un
dispositif de communication, la première position étant déterminée à un premier stade, dans lequel la première
position du premier stade est reçue directement dans le modèle d'apprentissage machine au deuxième stade si
une première précision de localisation de la première position du premier stade est inférieure à une deuxième
précision de localisation d'une qualité de service de localisation ;
recevoir, au deuxième stade, la première précision de localisation du premier stade si la première précision de
localisation est inférieure à la deuxième précision de localisation ; et
déterminer (1320), au deuxième stade, sur la base de la première position du premier stade, de la première
précision de localisation reçue et d'un deuxième ensemble de mesures associées au dispositif de communication, une deuxième position du dispositif de communication à l'aide du modèle d'apprentissage machine.

2. Procédé selon la revendication 1, dans lequel :

le modèle d'apprentissage machine au deuxième stade comprend un auto-encodeur ; et
la première position du premier stade est reçue sur une couche latente de l'auto-encodeur.

3. Procédé selon la revendication 2,

dans lequel la première précision de localisation du premier stade est reçue sur la couche latente de l'auto-encodeur.

4. Procédé selon la revendication 2 ou 3, comprenant en outre les étapes suivantes :
   entraîner hors ligne l'auto-encodeur :

   en calculant une première perte au niveau d'une sortie de l'auto-encodeur ;
   en calculant une deuxième perte sur la couche latente de l'auto-encodeur en utilisant au moins la première position du dispositif de communication et la deuxième position du dispositif de communication ; et
   en utilisant la première perte et la deuxième perte pour entraîner l'auto-encodeur.

5. Procédé selon la revendication 4,
   dans lequel la deuxième perte comprend une somme d'un premier terme et d'un deuxième terme, le deuxième terme faisant en sorte que la deuxième position soit dans un espace autour de la première position.

6. Procédé selon la revendication 5,
   dans lequel le deuxième terme est basé sur une distance absolue maximale entre la première position et la deuxième position.

7. Appareil comprenant :

   au moins un processeur ; et
   au moins une mémoire comportant un code de programme informatique,
   dans lequel l'au moins une mémoire et le code de programme informatique sont configurés pour, avec l'au moins un processeur, amener l'appareil à au moins mettre en œuvre le procédé selon la revendication 1.

8. Appareil selon la revendication 7, dans lequel :

   le modèle d'apprentissage machine au deuxième stade comprend un auto-encodeur ; et
   la première position du premier stade est reçue sur une couche latente de l'auto-encodeur.

9. Appareil selon la revendication 8,
   dans lequel la première précision de localisation du premier stade est reçue sur la couche latente de l'auto-encodeur.

10. Appareil selon la revendication 8 ou 9,
    dans lequel l'au moins une mémoire et le code de programme informatique sont en outre configurés pour, avec l'au moins un processeur, amener l'appareil au moins à :
    entraîner hors ligne l'auto-encodeur :

    en calculant une première perte au niveau d'une sortie de l'auto-encodeur ;
    en calculant une deuxième perte sur la couche latente de l'auto-encodeur en utilisant au moins la première position du dispositif de communication et la deuxième position du dispositif de communication ; et
    en utilisant la première perte et la deuxième perte pour entraîner l'auto-encodeur.

11. Appareil selon la revendication 10,
    dans lequel la deuxième perte comprend une somme d'un premier terme et d'un deuxième terme, le deuxième terme faisant en sorte que la deuxième position soit dans un espace autour de la première position.

12. Appareil selon la revendication 11,
    dans lequel le deuxième terme est basé sur une distance absolue maximale entre la première position et la deuxième position.

13. Support non transitoire lisible par ordinateur comprenant :
    des instructions de programme stockées sur celui-ci pour mettre en œuvre les procédés selon les revendications 1 à 6.

Fig. 1

Fig. 2

Fig. 3

Fig. 4

Fig. 5

Fig. 6

Fig. 7

Fig. 8

Fig. 9

Fig. 10

Fig. 11

EP 4 034 948 B1

```
┌─────────────────────────────┐
│  determining, at a first stage, a
│       first position of a
│      communications device
└─────────────────────────────┘
              │
              ▼
┌─────────────────────────────┐
│  inputting, from the first stage,
│  the first position to a ML model
│        at a second stage
└─────────────────────────────┘
              │
              ▼
┌─────────────────────────────┐
│     determining, at the second
│     stage, at least based on the
│     first position from the first
│   stage, a second position of the
│       communications device by
│          using the ML model
└─────────────────────────────┘
```

1210

1220

1230

Fig. 12

1200

EP 4 034 948 B1

1310 — receiving, at a ML model at a second stage, a first position of a communications device, the first position being determined at a first stage

1320 — determining, at the second stage, at least based on the first position from the first stage, a second position of the communications device by using the ML model

1300

Fig. 13

Fig. 14

Fig. 15

EP 4 034 948 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019036860 A1

- US 2016021503 A1

**Non-patent literature cited in the description**

- **CAMPOS RAFAEL SARAIVA et al.** A priori selection of high accuracy mobile station position estimates. *2014 International Telecommunications Symposium*

- **J. A. DEL PERAL-ROSADO et al.** Survey of cellular mobile radio localization methods: from 1G to 5G. *IEEE Communications Surveys & Tutorials*, vol. 20 (2), 1124-1148
- **L. ZHANG et al.** An efficient machine learning approach for indoor localization. *China Communications*, November 2017, vol. 14 (11), 141-150